# EUROPEAN PATENT APPLICATION

(11) **EP 2 808 537 A1**
(43) Date of publication of application: **03.12.2014**
(21) Application number: 13305695.2
(22) Date of filing: 28.05.2013
(51) Int. Cl.: F03B 1/04

(54) **Hydraulic pelton turbine**

(71) Applicant: ALSTOM Renewable Technologies, 92300 Levallois Perret (FR)
(72) Inventor: Patel, Bhargav, 38000 Grenoble (FR); Bomchil, Yoann, 38600 Fontaine (FR); Balcet, Nicolas, 21140 Semur-en-Auxois (FR)
(74) Representative: Pesce, Michele

(57) **Abstract**

This hydraulic Pelton turbine, comprises a runner, that rotates around a main axis, and includes runner buckets, evenly spaced around a central axis and at least one injector (2), that creates a water jet (24) through an orifice (O1), along an injection axis (X20) said water jet striking one of the runner buckets.

The turbine is also equipped with air injection means (206), located in the mouthpiece (20) of the water injector (2) and generating an air jet jacket (26) around the water jet.

## Description

The present invention relates to a hydraulic impulse turbine or Pelton turbine. The principle of this kind of turbine is to convert the potential energy of water into mechanical energy. The available energy in output can be either directly used for driving mechanical tools or converted to electrical energy using a generator. The water used to drive the turbine is supplied from a high altitude reservoir and flows through a long conduit called penstock. To control the flow of water inside a Penstock, a valve is located upstream the Pelton turbine. When the power plant is using several Pelton turbines or when a single Pelton turbine is using several water jet, the water is dispatched by a distributor. So, the function of the distributor is to divide equally a flow coming from the Penstock in order to feed each water injector with the appropriate water flow. Afterwards, the water is accelerated in these injectors. The required discharge is obtained by reducing the section in which the water flows. The water accelerated in output of the injectors results in a high velocity free jet at atmospheric pressure.

The main part of a Pelton turbine is the runner, which rotates around a shaft under the impulse of water jets. This runner is supported by a housing and contains several runner buckets, evenly spaced around the shaft and whose shape is optimized to receive the water jet. The water jets strike the runner buckets with a high kinetic energy. During the contact between a water jet and a runner bucket, the water jet losses its kinetic energy within the bucket by transforming it into mechanical energy. Obviously, the conversion of the energy involves losses. This is why designers and manufacturers of Pelton turbines are trying to reduce as much as possible these losses to improve the global efficiency of the machine.

One energy loss is occurring when the water jet is traveling between the injector and the runner bucket. With the purpose to get a good efficiency during the impact of the water jet into the runner bucket, it is known that the jet feeding the buckets has to be undispersed, cylindrical and straight. However, the flow of water coming from the reservoir usually suffers from changes of direction or changes of section. These changes are for example implied by bends or bifurcations. Therefore, the flow of water might develop a turbulent behavior and lead to a diverging jet having an unsymmetrical notch. In other words, it turns out that the water jet is not precisely cylindrical and straight.

In addition, the water jet is subjected to friction with the surrounding air. This friction occurs because the water jet has a high velocity while its surrounding air is at steady state. This phenomenon is creating losses and deteriorates the quality of the jet striking the runner blades.

In order to solve these problems, it is known to decrease as much as possible the length of the free jet. Indeed, the shorter the length of the free jet is, the better is the quality of the jet. It is known as well to add an extra upstream distributor whose aim is to remove or dilute the effect of internal secondary structures developing within the fluid. A typical internal secondary structure is a local spinning motion of the fluid near some point. However, the scope of this distributor is limited because it cannot be fully removed. It is also known to add protection plates around the water jet which helps to make the water jet keep a cylindrical shape. However, the space between injectors and runner buckets is limited since the length of the water jet has to be as short as possible. The addition of these plates adds congestion to the turbine and increases the risk of a mechanical interference.

The invention intends to solve these drawbacks by proposing a Pelton turbine in which the water jet is undispersed and much less suffering from the friction existing with the surrounding air.

To this end, the invention relates to a hydraulic Pelton turbine, comprising a runner, that rotates around a main axis, and includes runner buckets, evenly spaced around a central axis and at least one injector, that creates a water jet through an orifice, along an injection axis and, said water jet striking one of the runner buckets, whereas the turbine is also equipped of air injection means, located in the mouthpiece of the water injector and generating an air jet jacket around the water jet.

Thanks to the invention, the water jet coming out of the water injector has a better quality and is not subject to the friction occurring between the water and the surrounding air layer. Improving the jet quality is also profitable to gain in efficiency for the turbine.

According to further aspects of the invention which are advantageous but not compulsory, such a turbine may incorporate one or several of the following features:
- The ratio between the axial velocity of the air jet jacket and the axial velocity of the water jet can be chosen between 0,2 and 2.
- The air jet jacket has its internal surface tangent to the water jet surface.
- The air injection means include at least one air inlet hole and at least one air outlet hole, the air being driven through these holes.
- The air outlet holes are evenly spaced around the orifice.
- The air injection means include a single annular air outlet hole, centred on the injection axis around the orifice of the injector.
- The air jet jacket has a radial thickness, with respect to the injection axis, which is larger than 2% of the water jet diameter.
- The air injection means comprise a compressor or any other source of compressed air.

The invention will now be explained in correspondence with the annexed figures and as an illustrative example, without restricting the object of the invention. In the annexed figures:
- Figure 1 is a principle side view of a Pelton turbine
- Figure 2 is a detailed view at a larger scale of the frame II shown figure 1,
- Figure 3 is a detailed view at a larger scale of the frame III shown figure 1,
- Figure 4 is a detailed view at a larger scale of the frame IV shown figure 1

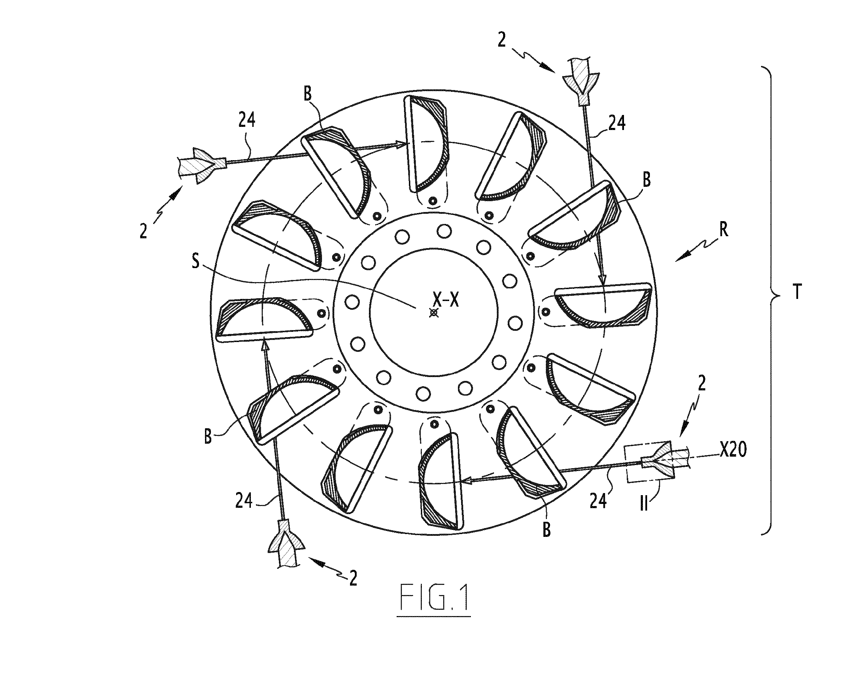

On the figure 1 is represented a Pelton turbine T, Pelton turbine T includes a runner R which is able to rotate around a horizontal axis X-X defined by a shaft S under the impulse of four water jets 24. This runner R is supported by a housing which is not represented on the figures and includes several runner buckets B, evenly spaced around the shaft S and whose shape is optimized to receive the water jets 24. The water usually comes from a high altitude reservoir, flows through a penstock and reaches injectors 2. The injectors 2 then produce water jets 24 with a sufficient speed. As a result, the water jets 24 strike the runner buckets B with a high kinetic energy so that the runner R is set in rotation around axis X-X. The rotation of the runner R might be used to generate electricity through a generator. The water used to rotate the runner R flows outside the turbine T through a tailrace channel, which is not represented on the figures as well.

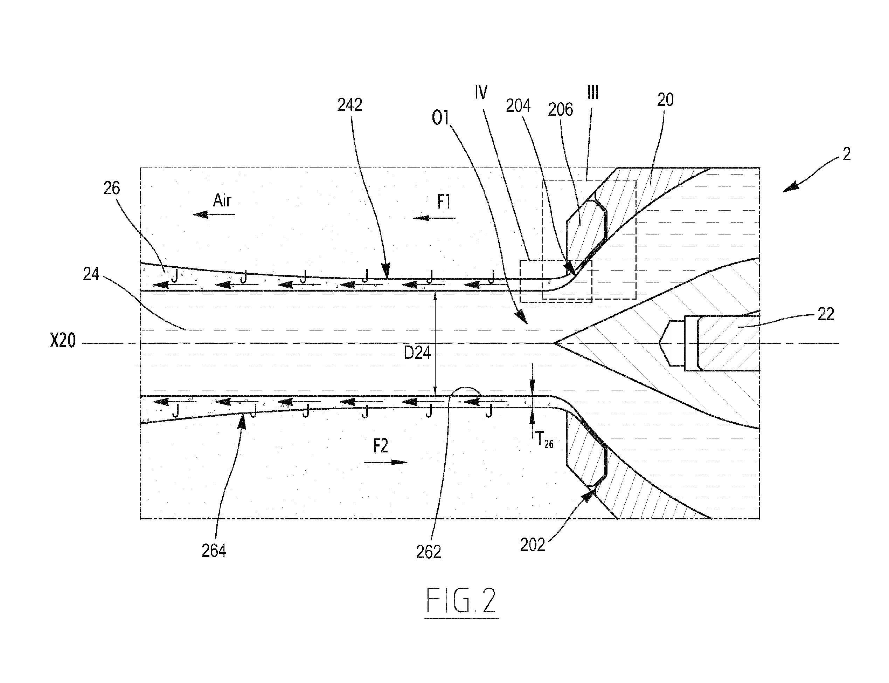

Figure 2 shows a mouthpiece 20 of a water injector 2 of the Pelton turbine T of figure 1. The mouthpiece 20 is the terminal portion of the injector and is centered on an axis X20 which is the axis of injection. The axis X20 is globally orthoradial to the X-X axis. Mouthpiece 20 defines an orifice O1 for water injection. Water is represented on the figures as a dashed area, while air is represented as a dotted area. A downward portion of a needle 22 is also located inside the mouthpiece 20. This needle 22 is centered on axis X20 and designed to channel water towards orifice O1 of injector 2. The mouthpiece 20 of injector 2 presents a section which is shrunk downstream. In this way, the flow of water speeds up along a direction F1, which is oriented from the right to the left on the figure 1, and gains in kinetic energy. The diameter of the terminal section of the water injector 2 has been designed to generate a water jet 24 with a specific size. D24 denotes the diameter of the water jet 24. This diameter of the water jet 24 depends on the size of the runner of the turbine. A typical range of the jet diameter D24 is between 10% and 30% of the bucket width. Furthermore, the mouthpiece 20 has a terminal shape having a circular section in order to give to the water jet a cylindrical form.

Air injection means 206 are located within the mouthpiece 20 of the water injector 2. These injection means 206 are pumps using Venturi effect. These means 206 drain external air from eight air inlet holes 202 and drive it respectively to air outlet holes 204. The outlet holes 204 are equally spaced around axis X20 and are surrounding orifice O1. As a result, the air injection means 206 generate an air jet 26 having a hollow cylindrical shape, along direction F1 and surrounding the water jet 24. This air jet is called an "air jet jacket" as it wraps the water jet 24 around the axis X20.

242 denotes an external surface of the water jet 24, 264 denotes an external surface of the air jet jacket and 262 denotes an internal surface of the air jet jacket 26. The air jet jacket 26 travels with a high velocity, as represented by the arrows J within the air jet jacket 26.

The air velocity V_{A} along axis X20 in air jacket 26 can be substantially equal to the water velocity V_{W} along the same axis in water jet 24. The ratio V_{A}/V_{W} can be chosen between 0.2 and 2.0.

As shown figure 2, the internal surface 262 of the air jet jacket 26 is tangent to the external surface 242 of the water jet 24. Indeed, it is very important to keep the air jet jacket 26 precisely surrounding the water jet 24. If surface 262 is not tangent to surface 242, perturbations might appear on the jet surface because the surface of the water jet 24 is very sensitive to the air flow surrounding it. This is why the air jet jacket 26 has to keep the same direction along the water jet 24 in order to channel the water jet 24 along axis X20 and make water jet 24 keep its cylindrical shape. Indeed, a water jet with a cylindrical and straight shape strikes the runner buckets with a high efficiency. Moreover the protection of the water jet 24 by air jet jacket 26 helps to limit dispersion due to bends and bifurcations.

The injection means 206 produce an air jet jacket 26 with an optimum velocity. I1 denotes an interface between air jet jacket 26 and water jet 24. The adjustment of the velocity V_{A} of the air jet jacket 26, with regards to the velocity V_{W} of the water jet 24 allows to avoid the effect of a shear force appearing at interface I1 between the air jet layer and the water jet 24.

More precisely, in a usual injector, the water jet 24 transfers its momentum to the surrounding air, this momentum resulting in a shear force opposing to the movement of the water jet. The direction of the shear force is represented on the figure 1 by the arrow F2. This shear force leads to a deformation of the water jet 24 giving for instance, a nonuniform external surface shape to the jet.

With the turbine of the invention, if the air jet jacket travels with an optimum velocity, momentum balance is achieved. This protects the jet from deformation due to the transfer of momentum occurring between air and water and from outside droplets of water, therefore, giving an improved jet quality.

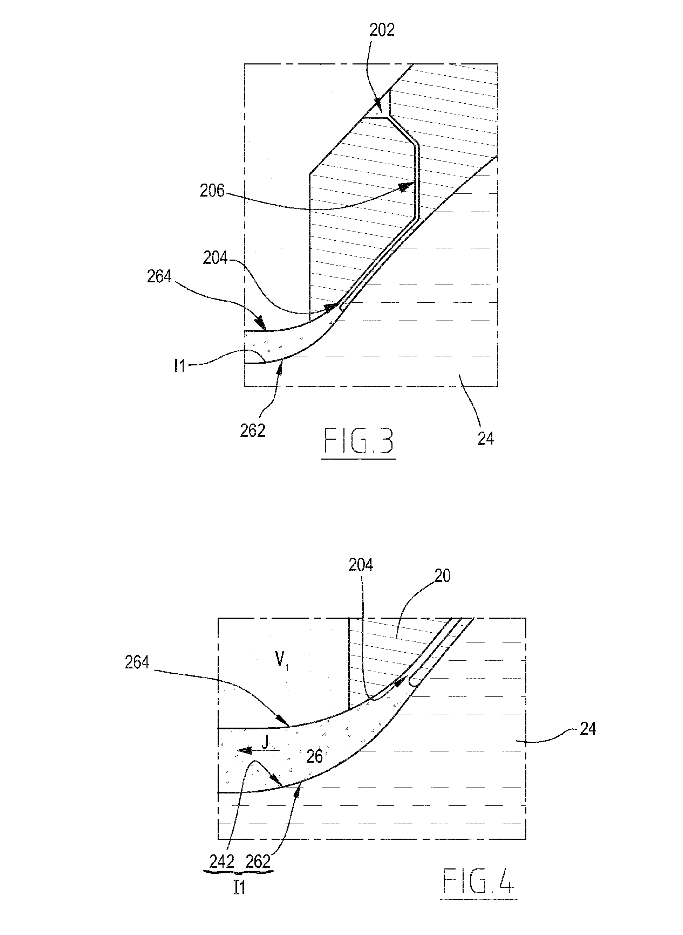

As shown figure 3, there are two layers of air surrounding the water jet 24, a volume V₁ represents the environmental air at steady state while the air jet jacket 26 is traveling with a high velocity. Therefore the air jet jacket 26 transfers its momentum to the volume V₁ and the external surface 264 of the air jet jacket 26 undergoes a deformation due to this momentum. That is why the external surface 262 of the air jet jacket 26 has a diverging shape on figure 1. This perturbation doesn't spread to the internal surface 262 because the air jet jacket 26 has a required radial thickness T₂₆, with respect to axis X20. This required thickness T₂₆ is typically larger than 2% of the water jet diameter D24.

The exact position of the inlet and outlet air holes 202 and 204 is not important as long as air jet jacket 26 is tangent to water jet 24.

According to a variant of the invention, the number of inlet holes 102 and outlet holes 204 can be different from eight.

Another variant consists in replacing air outlet holes 24 by an annular outlet surrounding orifice O1 of the injector 2.

Alternatively, the air injection means 206 comprise a compressor or any other source of compressed air.

Eventually, the jacket surrounding the water jet 24 might be formed by another type of fluid.

Technical features and alternatives of the invention can be combined to give new objects covered by the invention.

## Claims

1. Hydraulic Pelton turbine (T), comprising:
- a runner (R), that rotates around a main axis, and includes runner buckets (B), evenly spaced around a central axis (X-X),
- at least one injector (2), that creates a water jet (24) through an orifice (O1), along an injection axis (X20), said water jet striking one of the runner buckets (B),
wherein the turbine is also equipped with air injection means (206), located in the mouthpiece (20) of the water injector (2) and generating an air jet jacket (26) around the water jet.

2. Hydraulic Pelton turbine (T) according to claim 1, wherein the ratio between the axial velocity (V_{A}) of the air jet jacket (26) and the axial velocity (V_{W}) of the water jet (24) is between 0,2 and 2.

3. Hydraulic Pelton turbine (T) according to any one of the previous claims, wherein the air jet jacket (26) has its internal surface (262) tangent to the water jet surface (242).

4. Hydraulic Pelton turbine (T) according to any one of the previous claims, wherein the air injection means (206) include at least one air inlet hole (202) and at least one air outlet holes (204), the air being driven through these holes.

5. Hydraulic Pelton turbine (T) according to claim 4, wherein the air outlet holes (204) are evenly spaced around the orifice (O1).

6. Hydraulic Pelton turbine (T) according to claim 4, wherein the air injection means (206) include a single annular air outlet hole, centred on the injection axis (X20) around the orifice (O1) of the injector (2).

7. Hydraulic Pelton turbine (T) according to any one of the previous claims, wherein the air jet jacket (26) has a radial thickness (T₂₆), with respect to the injection axis (X20), which is larger than 2% of the water jet diameter (D24).

8. Hydraulic Pelton turbine according to any one of the previous claims, wherein the air injection means (206) comprise a compressor or any other source of compressed air.
